# EUROPÄISCHE PATENTSCHRIFT

(11) **EP 2 507 481 B1**
(45) Veröffentlichungstag und Bekanntmachung des Hinweises auf die Patenterteilung: **02.03.2016**
(21) Anmeldenummer: 10779767.2
(22) Anmeldetag: 11.11.2010
(51) Int. Cl.: F01D 25/00, F02C 7/30, F01D 25/32, F01K 7/06

(54) **VERFAHREN ZUM BETRIEB EINER DAMPFTURBINE UND DAMPFTURBINE**
METHOD FOR OPERATING A STEAM TURBINE AND STEAM TURBINE
PROCÉDÉ POUR FAIRE FONCTIONNER UNE TURBINE À VAPEUR ET TURBINE À VAPEUR

(30) Priorität: 03.12.2009 DE 102009056839
(43) Veröffentlichungstag der Anmeldung: 10.10.2012
(73) Patentinhaber: Siemens Aktiengesellschaft, 80333 München (DE)
(72) Erfinder: HANEBUTH, Marc, 22297 Hamburg (DE); HAMMER, Thomas, 91334 Hemhofen (DE); SÜRKEN, Norbert, 45468 Mülheim a.d. Ruhr (DE)
(86) Internationale Anmeldenummer: PCT/EP2010/067300
(87) Internationale Veröffentlichungsnummer: WO 2011/067088

(56) Entgegenhaltungen:
- EP-A2- 2 128 387
- DE-A1-102005 046 720
- GB-A- 956 348
- US-A- 4 732 326
- US-A- 5 231 832
- US-A1- 2005 207 880

## Beschreibung

Die Erfindung betrifft ein Verfahren zum Betrieb einer Dampfturbine gemäß Anspruch 1, eine zugehörige Dampfturbine umfassend durch Dampf betriebene Turbinenschaufeln und eine Dampfzuleitung zu den Turbinenschaufeln, sowie einen Zerstäuber zum Einsatz in der Dampfturbine gemäß Anspruch 4.

Dampfturbinen sind im Stand der Technik grundsätzlich bekannt und bilden meist Bestandteil eines Kreisprozesses, der auch Dampfturbinenprozess genannt wird. Dabei wird Wasser in einem Dampferzeuger erhitzt und strömt als Dampf in die Dampfturbine. In der Dampfturbine entspannt sich der Dampf und treibt so die Turbine und einen angeschlossenen Generator an. Im Kondensator wird der Wasserdampf dann gekühlt und wieder zu Wasser kondensiert. Beispielsweise mittels einer Pumpe wird das Kondenswasser wieder auf den Druck im Dampferzeuger gebracht und dorthin gepumpt.

Verschiedenste Ansätze wurden und werden verfolgt, um den Wirkungsgrad von Dampfturbinen zu steigern. Neben mechanischen Maßnahmen wurde jedoch auch vorgeschlagen, Chemikalien in den Dampfstrom zuzugeben, um so einen höheren Turbinenwirkungsgrad zu erzielen. Die grundlegende Idee ist es, die Kondensation des Wasserdampfes zu unterstützen und somit einer Übersättigung entgegenzuwirken. Damit soll insbesondere auch einer Erosion entgegengewirkt werden, die durch entstandene größere Tröpfchen (primär oder sekundär) an den Turbinenschaufeln auftreten kann.

Bei der Zugabe von Chemikalien sind unterschiedliche Ansatzmöglichkeiten bekannt, um die Kondensation zu unterstützen und somit den Wirkungsgrad von Dampfturbinen bei gleichzeitiger Erosionsvermeidung zu steigern. So wurde vorgeschlagen, als zusätzliche Chemikalie Tenside in den Dampfstrom einzubringen, die die Oberflächenspannung von Tröpfchen erniedrigen, was eine Kondensation begünstigt. In einer anderen Variante wurde vorgeschlagen, lösliche Substanzen, beispielsweise Salze, zuzugeben, um den Dampfdruck der Tröpfchen zu erniedrigen. Dabei tritt allerdings der Nachteil auf, dass durch die Zugabe von wasserlöslichen ionischen Substanzen eine Korrosion der Anlage begünstigt wird, so dass dieser Ansatz kaum eine Anwendung innerhalb von Dampfturbinen finden wird.

Der Erfindung liegt daher die Aufgabe zugrunde, ein Verfahren zum Betrieb einer Dampfturbine sowie eine zugehörige Dampfturbine anzugeben, bei denen die Kondensationseigenschaften möglichst ohne schädigende Einflüsse auf die Dampfturbine zur Erreichung eines höheren Wirkungsgrades verbessert werden.

Zur Lösung dieser Aufgabe ist erfindungsgemäß ein Verfahren zum Betrieb einer Dampfturbine vorgesehen, bei dem der in die Dampfturbine einzuleitende Dampf mit unlöslichen, Kondensationskeime bildenden Partikeln versetzt wird.

Die Idee der vorliegenden Erfindung ist es folglich, wasserunlösliche Partikel zuzugeben, die als Kondensationskeime dienen können. Die Voraussetzung dafür ist, dass die Kondensationskeime, also die Partikel, einen niedrigen Kontaktwinkel zu Wasser aufweisen. Ein aus dem Stand der Technik bekanntes Beispiel für Kondensationskeime sind Silberjodid-Partikel (AgI). Diese Substanz findet derzeit Anwendung, wenn ein Abregnen von Wolken in der Atmosphäre erzwungen werden soll. Erfindungsgemäß bevorzugt ist es jedoch, dass die Partikel aus Titandioxid bestehen. Aus Titandioxid als Material für die Partikel können ebenso sehr kleine, unlösliche Partikel mit niedrigem Kontaktwinkel zu Wasser hergestellt werden.

Zweckmäßig ist die Verwendung möglichst kleiner Partikel, um bei einem geringen Materialverbrauch eine maximale Anzahl von Kondensationskeimen zu generieren und die entstehenden Tröpfchen in ihrer Größe zu begrenzen. Beispielsweise können in erster Näherung sphärische Partikel verwendet werden, deren Größe im Bereich von 2 - 250 nm liegt. Insbesondere werden Nanopartikel verwendet, deren Größe mithin von 1 - 100 nm reicht. Allerdings kann auch vorgesehen sein, eine Agglomeration von in erster Näherung sphärischen Partikeln zu größeren Partikeln zu erlauben.

Die wasserunlöslichen Partikel werden folglich vor dem Erreichen der Turbinenschaufeln in den Dampfstrom eingebracht. Da die Partikel nicht in Wasser löslich sind, wird eine Korrosion vermieden. Weiterhin werden sehr kleine Partikel, insbesondere Nanopartikel, verwendet, da hiermit Material eingespart werden kann und auch eine Erosion durch Kollision der Partikel oder Tröpfchen mit den Schaufeln verringert werden kann.

Die Partikel, insbesondere die Nanopartikel, dienen dabei als Kondensationskeime, so dass einer Übersättigung entgegengewirkt wird. Im Idealfall kann diese sogar vermieden werden. Es ergibt sich eine zeitnahe Kondensation mit vielen kleinen Tröpfchen, insbesondere, wenn sehr kleine Partikel verwendet werden. Auf diese Weise wird schließlich der Wirkungsgrad der Dampfturbine erhöht und es tritt weniger Tropfenschlagerosion auf.

Die Partikel wirken dabei in den letzten Stufen der Dampfturbine, und zwar hauptsächlich in der Region, in der eine Übersättigung eintreten kann. Dabei sollten die Partikel möglichst so in den Dampfstrom eingebracht werden, dass sie über den gesamten Querschnitt des Dampfstroms innerhalb der Dampfturbine verteilt vorliegen. Auf diese Weise wirken die positiven Eigenschaften der vorliegenden Erfindung auf den gesamten Dampfstrom.

Es hat sich im Rahmen der vorliegenden Erfindung gezeigt, dass die Bereitstellung von unlöslichen Partikeln in einem Dampfstrom praktische Schwierigkeiten mit sich bringen kann. Denn in fester Form lassen sich Partikel, insbesondere Nanopartikel, zum einen nur schlecht transportieren, zum anderen sind makroskopische Methoden der Feststoffförderung aus der Verfahrenstechnik nur schwer anwendbar, da eine übermäßige Agglomeration zu übergroßen Partikeln auftreten kann. Daher kann beim erfindungsgemäßen Verfahren mit besonderem Vorteil vorgesehen sein, dass ein Präkursor des Materials, aus denen die Partikel bestehen, in den Dampf insbesondere feinzerstäubt eingebracht wird, wo in einer Hydrolysereaktion das Material und die Partikel entstehen. Es wird daher vorgeschlagen, von einem flüssigen Präkursor auszugehen, der dann in den Dampfstrom hinein fein zerstäubt wird, um dort mit dem Wasser im Rahmen einer chemischen Reaktion die unlöslichen Partikel, insbesondere Nanopartikel, zu bilden. Sollen beispielsweise die Partikel aus Titandioxid (TiO₂) bestehen, so kann als Präkursor vorteilhafterweise Titan-(IV)-Butoxid (Ti(OC₄H₉)₄) verwendet werden. Die Reaktionsgleichung der Hydrolyse lautet dann:

Ti (OC₄H₉)₄ + 2 H₂0 → TiO₂ + 4 HOC₄H₉.

Auf diese Weise können mit der vorliegenden Erfindung die Partikel durch die Hydrolyse des flüssig vorliegenden Präkursors in situ erzeugt werden. Das hat den Vorteil, dass eine technisch aufwendige Förderung bzw. Dosierung von Feststoffen vermieden wird und, worauf im Folgenden noch näher eingegangen werden wird, Eigenschaften der resultierenden Partikel (Größe, Form, Agglomeration, Oberflächenmodifizierungen) durch die Zusammensetzung der Präkursorlösung und die Einstellungen der Zerstäubung beeinflusst werden können.

Dabei kann weiter vorgesehen sein, dass der Präkursor insbesondere mit Alkohol verdünnt wird. Es können folglich organische, nicht-wässrige Lösungsmittel verwendet werden, insbesondere Alkohol, um den Präkursor zu verdünnen. Auf diese Weise lassen sich die physikalischen Eigenschaften der Lösung an die gegebenen Anforderungen anpassen. Insbesondere lassen sich die Eigenschaften der Kondensationskeime, also der Partikel, beeinflussen, beispielsweise ihre Größe und/oder die Agglomeration. Bei einer bestimmten Art von Lösungsmitteln kann auch erreicht werden, dass die Partikel mit einem organischen Überzug versehen werden, der beispielsweise die Eigenschaften als Kondensationskeim verbessern kann und/oder die Agglomeration vermeiden kann. Selbstverständlich können auch andere oder weitere Zusätze zu verschiedenen Zwecken dem Präkursor zugefügt werden, insbesondere, um eine organische Schicht auf den Partikeln zu erzeugen. So kann vorgesehen sein, dass Fluorverbindungen hinzugegeben werden, um die Agglomeration von Partikeln zu verringern.

Der Hauptvorteil des beschriebenen flüssigen Präkursors ist die Möglichkeit, ihn pumpen und feinzerstäuben zu können. Prinzipiell lassen sich herkömmliche Pumpen zur Zudosierung verwenden, wobei jedoch in der Hydrolyseempfindlichkeit des Präkursors und der damit einhergehenden Feststoffbildung besondere Maßnahmen nötig sind, um ein Verstopfen der Zuleitungen zu vermeiden. Mithin kann es bei der Verwendung konventioneller Einspritzdüsen, welche nichtsdestotrotz durchaus verwendet werden können, zu Nachteilen kommen, wenn beispielsweise der Querschnitt der Einspritzdüsen durch gebildete Feststoffe blockiert werden kann. Dabei kann vorgesehen sein, eine Hochdruckleistungspumpe zu verwenden, um in der Einspritzdüse auftretende Feststoffe im Zweifel durch große Kräfte aus der Einspritzdüse zu entfernen.

In besonders zweckmäßiger Ausgestaltung der vorliegenden Erfindung kann jedoch vorgesehen sein, dass der Präkursor mit einem Ultraschall-Piezozerstäuber zerstäubt wird. Ein solcher Zerstäuber weist idealerweise eine Zerstäubungsfläche auf, auf die die Zuleitung für den Präkursor mündet. Wird nun der Piezozerstäuber bei seiner Eigenfrequenz betrieben, resultiert hieraus eine Vibration dieser Zerstäubungsfläche und der Präkursor wird durch die Schwingung des Zerstäubers in den Dampfstrom eingebracht. Da die eigentliche Aufwirbelung auf der Zerstäubungsfläche stattfindet, besteht durch einen solchen Ultraschall-Piezozerstäuber der Vorteil, dass er ohne enge Zuleitungen auskommt und somit die Gefahr einer Verstopfung der Zuleitung reduziert ist. Zudem hat er selbstreinigende Eigenschaften, das bedeutet, wenn sich auf der Zerstäubungsfläche ungewollt ein Feststoff bilden sollte, wird dieser durch die Schwingungen des Zerstäubers hinfort geschleudert und mit dem Dampfstrom entfernt. Wird der Präkursor beispielsweise über eine Pumpe zugeführt, so kann über die Betriebsparameter der Pumpe eine hochgenaue Dosierung erfolgen.

Zweckmäßigerweise wird der Präkursor kontinuierlich durch eine Zuleitung unmittelbar auf die Zerstäubungsfläche dosiert. Das bedeutet, die Zuleitung für den Präkursor endet unmittelbar auf der Zerstäubungsfläche des Ultraschall-Piezozerstäubers, wobei der Präkursor durch diese kontinuierlich zugeführt werden kann. Auf diese Weise entsteht der Vorteil, dass der Prozess unter stationären Bedingungen gefahren werden kann, während beispielsweise bei einer tropfenweisen Dosierung das System periodisch zwischen Präkursorüberschuss (frischer Tropfen) und Präkursormangel (Tropfen ist quasi vollständig zerstäubt) wechseln würde.

Vorzugsweise sollten die als Kondensationskeime dienenden Partikel jedoch nicht nur zeitlich gleichmäßig erzeugt werden, sondern auch räumlich. Am effizientesten ist das erfindurigsgemäße Verfahren einsetzbar, wenn der gesamte Dampfstrom erfasst wird. Die genaue Vorgehensweise hängt dabei von der Fluiddynamik innerhalb einer Dampfturbine ab, worauf bezüglich der erfindungsgemäßen Dampfturbine noch näher eingegangen werden wird.

Wird ein Ultraschall-Piezozerstäuber verwendet, so kann dessen Eigenschaft, dass die elektrische Leistungsaufnahme und deren Umsetzung in hochfrequente, mechanische Schwingung nur dann optimal ist, wenn das System in Resonanz betrieben wird, vorteilhaft auch zur Regelung verwendet werden. Dabei kann beispielsweise vorgesehen sein, dass eine Steuereinheit die Versorgungsspannung und/oder den Versorgungsstrom, die von einer Hochfrequenz-Versorgung an den Piezozerstäuber abgegeben werden, in Abhängigkeit von deren Frequenz misst. Bei der Resonanzfrequenz ist die Impedanz minimal, das bedeutet, es fließt der größte Strom bei konstanter Spannung. Auf diese Weise kann also durch Variation der Frequenz und Minimierung der Impedanz die Resonanzfrequenz aufgefunden werden. In einem weiteren Schritt kann jedoch auch der Effekt genutzt werden, dass die Resonanzfrequenz selber nun wieder unter anderem von der Masse des schwingenden Systems abhängt, mithin auch von der Menge des auf der Zerstäubungsfläche vorhandenen Präkursors.

Wurde also, wie beschrieben, durch Messung von Spannung und Strom und entsprechende Minimierung der Impedanz die aktuelle Resonanzfrequenz des Piezozerstäubers durch Regelung aufgefunden, so kann aus dieser Resonanzfrequenz auf den Beladungszustand des Piezozerstäubers mit Präkursor bzw. Präkursorlösung geschlossen werden, so dass es möglich ist, den Massenstrom des Präkursors dem jeweiligen Betriebszustand des Piezozerstäubers anzupassen. Die Steuereinheit steuert also eine Zuleitungsvorrichtung zur Zuleitung des Präkursors auf die Zerstäubungsfläche abhängig von der Resonanzfrequenz so an, dass eine weitere zeitliche Kontinuität erreicht wird und vermieden wird, dass beim Zerstäuben zu große Tropfen entstehen, die zu zu große Partikeln führen könnten.

Neben dem Verfahren betrifft die Erfindung auch eine Dampfturbine, umfassend durch Dampf betriebene Turbinenschaufeln und eine Dampfzuleitung zu den Turbinenschaufeln, welche sich dadurch auszeichnet, dass an der Dampfzuleitung ein Mittel zum Versetzen des Dampfes mit unlöslichen, Kondensationskeime bildenden Partikeln vorgesehen ist. Sämtliche Ausführungen bezüglich des erfindungsgemäßen Verfahrens lassen sich selbstverständlich analog auf die erfindungsgemäße Dampfturbine übertragen.

So kann insbesondere vorgesehen sein, dass die Partikel aus Titandioxid bestehen und als Nanopartikel und/oder mit einer Größe im Bereich von 2 - 250 nm ausgebildet sind.

In weiterer Ausgestaltung der Dampfturbine kann diese wenigstens einen Zerstäuber für einen Präkursor des Materials der Partikel umfassen, welcher Präkursor hydrolytisch zu dem Material reagiert. Vorzugsweise handelt es sich, wie bereits beschrieben, bei dem Zerstäuber um einen Ultraschall-Piezozerstäuber, so dass die oben bereits dargestellten Vorteile erreicht werden können. Der Zerstäuber kann eine Zuleitungsvorrichtung mit einer Zuleitung für den Präkursor umfassen, welche Zuleitung auf einer Zerstäubungsfläche des Ultraschall-Piezozerstäubers endet, welche Zuleitungsvorrichtung zum kontinuierlichen Zuführen von Präkursor auf die Zerstäubungsfläche ausgebildet ist. Es sei an dieser Stelle angemerkt, dass es grundsätzlich denkbar ist, mehrere derartige Zerstäuber vorzusehen, in einer vorteilhaften weiteren Ausgestaltung jedoch auch ein großflächiger Zerstäuber mit einer großflächigen Zerstäubungsfläche vorgesehen werden kann, der mehrere Öffnungen von Zuleitungen auf einer oder mehreren Zerstäubungsflächen aufweist. Auf diese Weise kann sichergestellt werden, dass hinreichend viel Präkursor in den Dampfstrom gelangt, wo der Präkursor im Rahmen der Hydrolysereaktion mit dem enthaltenen Wasser selbst reagieren kann, um die Partikel zu bilden.

Wie bereits erwähnt, ermöglicht die Verwendung des Ultraschall-Piezozerstäubers auch eine vorteilhafte Regelung des gesamten Einstäubungssystems. Zunächst kann in einem ersten Schritt vorgesehen sein, dass eine Steuereinheit zur Regelung der Hochfrequenzversorgung des Zerstäubers, insbesondere der Frequenz, in Abhängigkeit des Versorgungsstroms und/oder der Versorgungsspannung vorgesehen ist. Wie bereits erläutert, wird auf eine möglichst niedrige Impedanz, also auf die Resonanzfrequenz hin, geregelt, indem der Versorgungsstrom und/ oder die Versorgungsspannung gemessen werden. Ergebnis ist immer eine aktuelle Resonanzfrequenz, bei der der Ultraschall-Piezozerstäuber betrieben wird. In Weiterbildung der Erfindung kann die Steuereinheit zusätzlich zur Regelung des Massenstroms des Präkursors in Abhängigkeit einer durch die Steuereinheit ermittelten aktuellen Resonanzfrequenz des Zerstäubers ausgebildet sein. Denn die aktuelle Resonanzfrequenz beschreibt mit, wie viel Präkursor gerade an der Zerstäubungsfläche anliegt, so dass zu große oder zu kleine Mengen des Präkursors detektiert werden können und nachgeregelt werden kann.

Wie bereits erwähnt, ist es denkbar, einen Zerstäuber unmittelbar in einem Hauptdampfkanal der Dampfzuleitung zu den Turbinenschaufeln vorzusehen. Beispielsweise kann ein solcher Zerstäuber länglich sein und bei einer Ausbildung als Ultraschall-Piezozerstäuber mehrere Öffnungen auf der länglichen Zerstäubungsfläche aufweisen, um so eine gleichmäßige Verteilung in dem Dampf zu erzielen. Die Längsrichtung entspricht dabei der Richtung des Hauptdampfkanals, so dass der Präkursor letztlich transversal eingestäubt wird.

Zweckmäßigerweise kann jedoch auch vorgesehen sein, dass die Dampfturbine eine Blase mit dem Zerstäuber umfasst, die eine Zuleitung für einen Teil des Dampfstroms und/oder einen inerten Gasstrom und eine zum Hauptdampfkanal führende Ableitung aufweist. Eine derartige Blase, die mithin mit dem Hauptdampfkanal verbunden ist, dient also dazu, den Präkursor in zumindest einen Teil des Dampfstroms oder einen inerten Gasstrom einzubringen. Ein derartiger inerter Gasstrom, der beispielsweise von einer weiteren Gasquelle ausgehen kann, dient dann lediglich zum Zuführen des Präkursors durch die Ableitung in den Hauptdampfkanal. Es kann jedoch auch vorgesehen sein, dass ein Teil des Dampfstroms beispielsweise vom Hauptdampfkanal abgeleitet wird, durch die Blase mit dem Zerstäuber geführt wird und dann wieder in den Hauptdampfkanal eingespeist wird. Die Blase kann dabei insbesondere in einem verengten Bereich vor dem Eintritt in das Schaufelgehäuse vorgesehen werden. Grundsätzlich ist jedoch bei der Positionierung die Fluiddynamik innerhalb der Dampfturbine zu berücksichtigen. Insbesondere sollte eine möglichst vollständige Durchmischung des durch die Ableitung dem Dampfstrom wieder zugeführten Teildampfstroms oder inerten Gasstroms mit dem Dampfstrom möglich sein.

Schließlich betrifft die Erfindung noch einen Zerstäuber für einen Präkursor, der in der erfindungsgemäßen Dampfturbine, wie sie soeben beschrieben wurde, eingesetzt werden kann. Sämtliche bezüglich des Zerstäubers getätigten Ausführungen sind analog auf den erfindungsgemäßen Zerstäuber anzuwenden, so dass dieser insbesondere als ein Ultraschall-Piezozerstäuber mit einer Zerstäuberfläche ausgebildet sein kann, in die eine Zuleitung für den Präkursor mündet.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1 - 3: eine Illustration zur Wirkungsweise von unlöslichen, als Kondensationskeime wirkenden Partikeln,
- Fig. 4: eine Detailansicht eines erfindungsgemäßen Zerstäubers,
- Fig. 5: ein weiterer erfindungsgemäßer Zerstäuber, und
- Fig. 6: eine erfindungsgemäße Gasturbine.

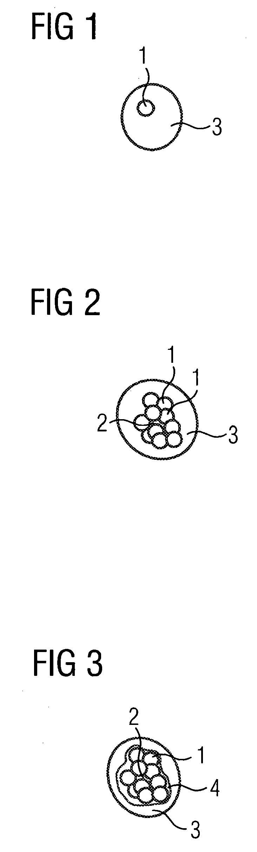

Die Fig. 1 - 3 erläutern das Wirkprinzip der Erfindung im Maßstab der Tröpfchenbildung. Fig. 1 zeigt den einfachsten Fall. Dabei liegen in erster Näherung sphärische, unlösliche, Kondensationskeime bildende Partikel 1 vor. Das Material der Kondensationskeime, hier wie auch im Folgenden Titandioxid, hat eine gewisse Affinität zu Wasser, was sich an einem niedrigen Kontaktwinkel zeigt. Wenn ein Partikel 1 in einem übersättigten Wasserdampfstrom vorliegt, lagern sich Wassermoleküle an und es entsteht ein Tröpfchen 3. Sind die Partikel sehr klein, beispielsweise Nanopartikel, lässt sich auf diese Weise bei einem niedrigen Materialverbrauch eine große Menge an Wasserdampf kondensieren.

In einigen Fällen kann es zweckmäßig sein, agglomerierte Partikel 1 für die Kondensation bereitzustellen, vgl. Fig. 2, die dann eine angedeutete Porenstruktur 2 aufweisen. Diese angedeutete Porenstruktur 2 kann die Kondensation von Wasser zu einem Tröpfchen 3 schneller und durch Kapillarkräfte bei einer niedrigeren Übersättigung erzwingen. Im Extremfall kondensiert sogar ein gewisser Teil des Dampfes noch vor dem Erreichen einer Übersättigung aus.

Als dritte Variante zeigt Fig. 3 schließlich die Möglichkeit, die Oberfläche der Partikel 1 bzw. der agglomerierten Partikel 1 in ihren Eigenschaften durch eine organische Schicht 4 zu modifizieren. Dabei kann die modifizierende Substanz dem Präkursor, der zur Bildung der Partikel 1 in den Dampfstrom eingestäubt wird, entstammen, beispielsweise das Lösungsmittel für den Präkursor bilden. Aber auch andere Zusätze sind denkbar. Beispielsweise kann dem Präkursor bzw. der Präkursorlösung eine Fluorverbindung zugesetzt werden, die die Agglomeration verhindert. Auch andere Zusätze, die Einfluss auf die Größe und Agglomeration sowie die organische Schicht 4 haben, können verwendet werden.

Im vorliegenden Beispiel sollen unlösliche, als Kondensationskeime dienende Nanopartikel aus Titandioxid in einen Dampfstrom eingebracht werden. Dafür ist vorgesehen, Titan-(IV)-Butoxid als Präkursor zu verwenden, der in den Dampfstrom hinein fein zerstäubt wird, um dort mit dem ohnehin vorhandenen Wasser im Rahmen einer chemischen Reaktion, hier eine Hydrolyse, die unlöslichen Nanopartikel zu bilden. Die Reaktionsgleichung der zugehörigen Hydrolyse wurde in der allgemeinen Beschreibung bereits niedergelegt.

Das Titan-(IV)-Butoxid ist flüssig und wird mit organischen Lösemitteln verdünnt, wobei in diesem Beispiel eine 1 %ige Lösung in Alkohol verwendet wird. Auf diese Weise können die Eigenschaften des Präkursors angepasst werden. Die Reaktion zu den Partikeln 1 findet also in situ im Dampfstrom statt

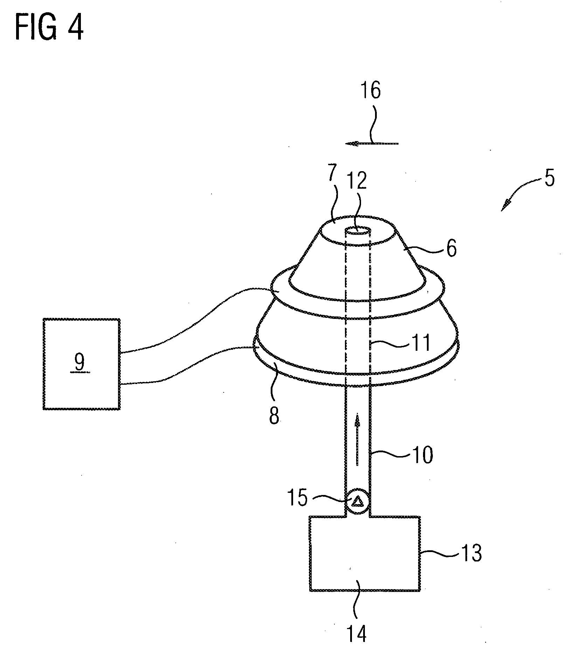

Fig. 4 zeigt nun ein erstes Ausführungsbeispiel eines Ultraschall-Piezozerstäubers 5, der zum feinen Zerstäuben des mit Alkohol verdünnten Präkursors verwendet werden kann. Der Zerstäuber 5 wird hier im Wesentlichen gebildet durch die im Betrieb schwingende, im Wesentlichen kegelstumpfförmig ausgebildete Hochfrequenz-Elektrode 6, die eine Zerstäubungsfläche 7 aufweist. Am unteren Ende der Hochfrequenz-Elektrode 6 schließt sich die Masseelektrode 8 an. Beide Elektroden sind entsprechend mit einer bei 9 angedeuteten Hochfrequenzstromversorgung verbunden.

Zentral durch die Elektroden 6, 8 ist eine Zuleitung 10 für den Präkursor geführt, die hier als Kapillare 11 ausgebildet ist. Die Kapillare 11, deren Durchmesser größer gewählt ist als der üblicher Zuleitungen für einen Zerstäuber, um das Risiko einer Verstopfung zu minimieren, endet inmitten der Zerstäubungsfläche 7, vgl. Öffnung 12. Die Zuleitung 10 ist Teil einer Zuleitungsvorrichtung 13, welche neben einem Reservoir 14 für den Präkursor eine Pumpe 15 umfasst, die kontinuierlich den Präkursor durch die Kapillare 11 auf die Zerstäubungsfläche 7 fördert, wo sich der Präkursor verteilt und durch die hochfrequenten Schwingungen der Zerstäubungsfläche 7 nach oben in Richtung des Dampfstroms (Pfeil 16) zerstäubt wird.

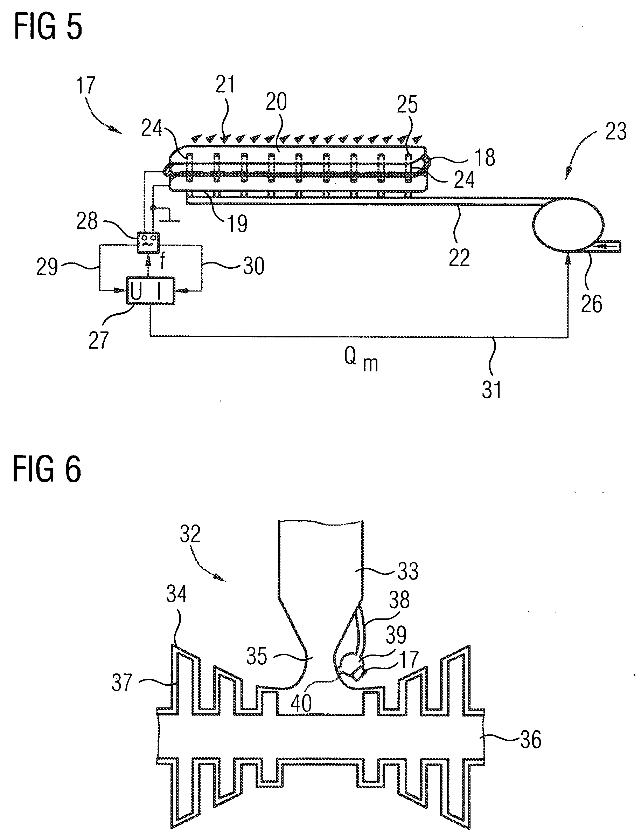

Es sei bereits an dieser Stelle angemerkt, dass auch eine Steuereinheit zur Regelung bei dem Zerstäuber 5 vorgesehen sein kann, wie sie später mit Bezug auf Fig. 5 noch näher erläutert werden wird.

Die Elektroden 6, 8 sowie die Kapillare 11 können dabei jeweils aus Metall gefertigt sein. Der hier dargestellte Ultraschall-Piezozerstäuber kann beispielsweise einen Durchmesser von etwa 1 cm aufweisen, wobei selbstverständlich auch andere Größen denkbar sind. Für eine übliche Dampfturbine können eine Mehrzahl solcher Ultraschall-Piezozerstäuber 5 vorgesehen sein, wobei allerdings auch die nun mit Bezug auf Fig. 5 beschriebene Variante eines Ultraschall-Piezozerstäubers 17 verwendet werden kann.

Ersichtlich weist der in Fig. 5 dargestellte Ultraschall-Piezozerstäuber 17 eine längliche Form mit wiederum einer Hochfrequenz-Elektrode 18 und einer Masseelektrode 19 auf, wobei die Masseelektrode 19 hier den eigentlichen Schwingkörper mit der länglichen Zerstäubungsfläche 20 bildet. Die Pfeile 21 deuten die Flussrichtung des Dampfstroms über die Zerstäubungsfläche 20 an.

Die Zuleitung 22 der Zuleitungsvorrichtung 23 zweigt sich dabei auf in in diesem Ausführungsbeispiel neun Kapillaren 24, deren Öffnungen 25 mittig auf der Zerstäubungsfläche 20 in äquidistanten Abständen in Längsrichtung angeordnet sind. Durch alle diese Öffnungen 25 wird kontinuierlich mittels einer bei 26 angedeuteten Pumpvorrichtung Präkursor auf die Zerstäubungsfläche 20 aufgebracht. Es handelt sich also letztlich um einen stationären Prozess, in dem kontinuierlich Präkursor zerstäubt und in den Dampfstrom eingebracht wird. Sollten sich Feststoffe, beispielsweise Partikel 1, auf der Zerstäubungsfläche 20 bilden, so werden diese durch die Schwingungen einfach abgestoßen und in den Dampfstrom überführt. Dies gilt im Übrigen auch für den Piezozerstäuber 5.

Gezeigt ist in Fig. 5 ferner eine Steuereinheit 27, die für einen möglichst gleichmäßigen Zerstäubungsvorgang sorgt. Dazu dienen im Wesentlichen zwei aneinandergekoppelte Regelprozesse.

Zum einen wird die einstellbare Hochfrequenzversorgung 28 geregelt. Diese stellt einen hochfrequenten Strom einer bestimmten Frequenz zur Verfügung. Diese sollte, um die optimale Zerstäubungswirkung zu erzielen, die Resonanzfrequenz der Masseelektrode 19 sein. Diese Resonanzfrequenz ist jedoch abhängig von der Menge an Präkursor, die sich gerade auf der Zerstäubungsfläche 20 befindet. Über die Steuereinheit 27 ist es nun möglich, zunächst kontinuierlich, Pfeile 29 und 30, die Versorgungsspannung und den Versorgungsstrom zu messen. Aus diesen ergibt sich die Impedanz, die bei der Resonanzfrequenz minimal ist, mithin von der Steuereinheit 27 durch entsprechende Ansteuerung der Hochfrequenzversorgung 28 durch Variation der Frequenz minimiert wird. Mithin ist immer eine aktuelle Resonanzfrequenz bekannt, die aber auch eine Aussage darüber enthält, wie viel Präkursor sich gerade auf der Zerstäubungsfläche 20 befindet.

Abhängig von der Resonanzfrequenz kann folglich in einem zweiten Schritt, Pfeil 31, die Pumpvorrichtung 26 so angesteuert werden, dass die Einstäubung von Präkursor in den Dampfstrom möglichst konstant gehalten wird. Ist beispielsweise zuviel Präkursor auf der Zerstäubungsfläche 20 enthalten, kann der Nachschub über die Zuleitung 22 kurzzeitig gedrosselt werden und umgekehrt.

Auf diese Weise ist ein selbstregelndes System gegeben, welches für eine gleichmäßige Einstäubung von Präkursor in den Dampfstrom verwendet werden kann. In dem Dampfstrom reagiert der Präkursor dann in der genannten Hydrolysereaktion zu Titandioxid, welches die als Kondensationskeime dienenden Nanopartikel 1, vgl. Fig. 1 -3, bildet.

Fig. 6 zeigt schließlich relevante Teile einer erfindungsgemäßen Dampfturbine 32 in einer Prinzipdarstellung. Über eine Dampfzuleitung 33 mit einem sich vor Eintritt in das Schaufelgehäuse 34 verengenden Hauptdampfkanal 35 wird der Dampf den auf der anzutreibenden Welle 36 angeordneten Turbinenschaufeln 37 zugeführt, wobei hier ein symmetrischer Aufbau gezeigt ist.

Ein Teil des Dampfstroms wird über eine Zuleitung 38 in eine sogenannte Blase 39 geführt, in der der bei 17 angedeutete Zerstäuber angeordnet ist. Der mit dem Präkursor bzw. schon durch Hydrolyse entstandenen Nanopartikeln 1 angereicherte Dampf wird durch eine Ableitung 40 wieder dem Hauptdampfkanal 35 zugeführt. Bei dieser Konstruktion ist die Fluiddynamik der Dampfzuleitung 33 so berücksichtigt worden, dass möglichst eine optimale Durchmischung und somit eine Verteilung von Nanopartikeln 1 über den gesamten Dampfstrom erreicht wird.

Es kann anstatt der Zuleitung 38 für einen Teil des Dampfstroms im Übrigen auch vorgesehen sein, ein inertes Gas mit dem Präkursor zu beladen und in den Hauptdampfkanal 35 einzuspeisen.

Es können selbstverständlich auch mehrere Zerstäuber 17 vorgesehen sein, aber auch mehrere der Zerstäuber 5 statt den Zerstäubern 17.

Schließlich sei noch angemerkt, dass es grundsätzlich bei einer geeigneten Fluiddynamik selbstverständlich auch denkbar ist, Zerstäuber 5 oder 17 unmittelbar im Hauptdampfkanal 35 anzuordnen, um so den Präkursor fein in den Wasserdampf zu zerstäuben, dass er aufgrund der Hydrolysereaktion gleichmäßig mit Nanopartikeln 1 versetzt wird.

## Patentansprüche

1. Verfahren zum Betrieb einer Dampfturbine, wobei der in die Dampfturbine einzuleitende Dampf mit unlöslichen, Kondensationskeime bildenden Partikeln versetzt wird, und wobei ein Präkursor des Materials, aus dem die Partikel bestehen, in den Dampf insbesondere fein zerstäubt eingebracht wird, wo in einer Hydrolysereaktion das Material und die Partikel entstehen, **dadurch gekennzeichnet, dass** der Präkursor mit einem Ultraschall-Piezozerstäuber zerstäubt wird.

2. Verfahren nach Anspruch 1, **dadurch gekennzeichnet, dass** die Partikel aus Titandioxid bestehen.

3. Verfahren nach Anspruch 1 oder 2, **dadurch gekennzeichnet, dass** der Präkursor insbesondere mit Alkohol verdünnt wird.

4. Dampfturbine (32), umfassend durch Dampf betriebene Turbinenschaufeln (37) und eine Dampfzuleitung (33) zu den Turbinenschaufeln (37), wobei an der Dampfzuleitung (33) ein Mittel zum Versetzen des Dampfes mit unlöslichen, Kondensationskeime bildenden Partikeln (1) vorgesehen ist, und wobei wenigstens ein Zerstäuber (5, 17) für einen Präkursor des Materials der Partikel (1) vorgesehen ist, welcher Präkursor hydrolytisch zu dem Material reagiert, **dadurch gekennzeichnet, dass** der Zerstäuber (5, 17) ein Ultraschall-Piezozerstäuber (5, 17) ist.

5. Dampfturbine nach Anspruch 4, **dadurch gekennzeichnet, dass** der Zerstäuber (5, 17) eine Zuleitungsvorrichtung (13, 23) mit einer Zuleitung (10, 22) für den Präkursor umfasst, welche Zuleitung (10, 22) auf einer zezstäubungsfläche (7, 20) des Ultraschall-Piezozerstäubers (5, 17) endet, welche Zuleitungsvorrichtung (13, 23) zum kontinuierlichen zuführen von Präkursor auf die Zerstäubungsfläche (7, 20) ausgebildet ist.

6. Dampfturbine nach Anspruch 4 oder 5, **dadurch gekennzeichnet, dass** eine Steuereinheit (27) zur Regelung der Hochfrequenzversorgung (28) des Zerstäubers (5, 17), insbesondere der Frequenz, in Abhängigkeit des Versorgungsstroms und/oder der Versorgungsspannung vorgesehen ist.

7. Dampfturbine nach Anspruch 6, **dadurch gekennzeichnet, dass** die Steuereinheit (27) zusätzlich zur Regelung des Massenstroms des Präkursors in Abhängigkeit einer durch die Steuereinheit (27) ermittelten aktuellen Resonanzfrequenz des Zerstäubers (5, 17) ausgebildet ist.

8. Dampfturbine nach einem der Ansprüche 4 bis 7, **dadurch gekennzeichnet, dass** sie eine Blase (39) mit dem Zerstäuber (5, 17) umfasst, die eine Zuleitung (38) für einen Teil des Dampfstroms und/oder einen inerten Gasstrom und eine zu einem Hauptdampfkanal (35) führende Ableitung (40) aufweist.

## Claims

1. Method for operating a steam turbine, wherein the steam to be fed into the steam turbine is mixed with insoluble particles that form condensation nuclei, and wherein a precursor of the material of which the particles consist is introduced into the steam in particular finely atomized, where a hydrolysis reaction gives rise to the material and the particles, **characterized in that** the precursor is atomized using an ultrasound Piezo atomizer.

2. Method according to Claim 1, **characterized in that** the particles consist of titanium dioxide.

3. Method according to Claim 1 or 2, **characterized in that** the precursor is thinned, in particular with alcohol.

4. Steam turbine (32), comprising turbine blades (37) driven by steam and a steam supply line (33) to the turbine blades (37), wherein there is provided, on the steam supply line (33), a means for mixing the steam with insoluble particles (1) that form condensation nuclei, and wherein there is provided at least one atomizer (5, 17) for a precursor of the material of the particles (1), which precursor reacts hydrolytically to the material, **characterized in that** the atomizer (5, 17) is an ultrasound Piezo atomizer (5, 17).

5. Steam turbine according to Claim 4, **characterized in that** the atomizer (5, 17) comprises a supply device (13, 23) with a supply line (10, 22) for the precursor, which supply line (10, 22) ends at an atomizing surface (7, 20) of the ultrasound Piezo atomizer (5, 17), which supply device (13, 23) is designed to continuously feed precursor onto the atomizing surface (7, 20).

6. Steam turbine according to Claim 4 or 5, **characterized in that** a control unit (27) is provided for regulating the high-frequency supply (28) of the atomizer (5, 17), in particular of the frequency, in dependence on the supply current and/or the supply voltage.

7. Steam turbine according to Claim 6, **characterized in that** the control unit (27) is also designed to regulate the mass flow rate of the precursor in dependence on a current resonance frequency of the atomizer (5, 17), determined by the control unit (27).

8. Steam turbine according to one of Claims 4 to 7, **characterized in that** it comprises a bladder (39) with the atomizer (5, 17), which has a supply line (38) for one part of the steam flow and/or an inert gas flow and a discharge line (40) leading to a main steam duct (35).

## Revendications

1. Procédé pour faire fonctionner une turbine à vapeur, dans lequel on mélange la vapeur à introduire dans la turbine à vapeur à des particules insolubles formant des germes de condensation et dans lequel on introduit un précurseur de la matière dont les particules sont constituées, notamment à l'état finement pulvérulent dans la vapeur, où se créent dans une réaction d'hydrolyse la matière et les particules, **caractérisé en ce qu'**on pulvérise le précurseur par un pulvérisateur piézoélectrique à ultrasons.

2. Procédé suivant la revendication 1, **caractérisé en ce que** les particules sont en dioxyde de titane.

3. Procédé suivant la revendication 1 ou 2, **caractérisé en ce qu'**on dilue le précurseur, notamment par de l'alcool.

4. Turbine (32) à vapeur comprenant des aubes (37) de turbine entraînées par de la vapeur et un conduit (33) d'amenée de vapeur aux aubes (37) de la turbine, dans lequel il est prévu sur le conduit (33) d'amenée de la vapeur un moyen de mélange de la vapeur à des particules (1) insolubles formant des germes de condensation, et dans lequel il est prévu un pulvérisateur (5, 17) pour un précurseur de la matière des particules (1), lequel précurseur donne par réaction hydrolytiquement la matière, **caractérisée en ce que** le pulvérisateur (5, 17) est un pulvérisateur (5, 17) piézoélectrique à ultrasons.

5. Turbine à vapeur suivant la revendication 4, **caractérisée en ce que** le pulvérisateur (5, 17) comprend un dispositif (13, 21) d'amenée ayant un conduit (10, 22) d'amenée du précurseur, lequel conduit (10, 22) d'amenée se termine sur une surface (7, 20) de pulvérisation du pulvérisateur (5, 17) piézoélectrique à ultrasons, lequel dispositif (13, 23) d'amenée est constitué pour l'amenée en continu de précurseur à la surface (7, 20) de pulvérisation.

6. Turbine à vapeur suivant la revendication 4 ou 5, **caractérisée en ce qu'**il est prévu une unité (27) de commande pour la régulation de l'alimentation (28) en haute fréquence du pulvérisateur (5, 17), notamment de la fréquence en fonction du courant d'alimentation et/ou la tension d'alimentation.

7. Turbine à vapeur suivant la revendication 6, **caractérisée en ce que** l'unité (27) de commande est constituée en outre pour la régulation du courant massique du précurseur en fonction d'une fréquence de résonance du pulvérisateur (5, 17) instantanée, déterminée par l'unité (27) de commande.

8. Turbine à vapeur suivant l'une des revendications 4 à 7, **caractérisée en ce qu'**elle comprend une bulle (39) avec le pulvérisateur (5, 17), laquelle a un conduit (38) d'amenée d'une partie du courant de vapeur et/ou d'un courant de gaz inerte et un conduit (40) d'évacuation menant à un canal (35) principal de vapeur.
